# EUROPÄISCHE PATENTSCHRIFT

(11) **EP 0 430 022 B1**
(45) Veröffentlichungstag und Bekanntmachung des Hinweises auf die Patenterteilung: **02.03.1994**
(21) Anmeldenummer: 90122141.6
(22) Anmeldetag: 20.11.1990
(51) Int. Cl.: F16B 37/02, F16B 37/04

(54) **Bauteilbefestigung in Kraftfahrzeugkarosserien mit einer Blechmutter und einem Schraubenbolzen**
Fastening of an element in motor vehicle bodyworks using a sheet metal nut and a threaded bolt
Fixation d'un élément pour carosseries d'automobile par un écrou en tôle et un boulon fileté

(30) Priorität: 21.11.1989 DE 3938547
(43) Veröffentlichungstag der Anmeldung: 05.06.1991
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE S. A., 92506 Rueil-Malmaison (FR)
(72) Erfinder: Reinl, Hans Georg, W-5010 Bergheim (DE)
(74) Vertreter: Messulam, Alec Moses

(56) Entgegenhaltungen:
- EP-A- 0 199 614
- DE-U- 6 753 463
- GB-A- 2 087 024
- US-A- 1 881 836
- US-A- 3 331 273

## Beschreibung

Die Erfindung bezieht sich auf eine Bauteilbefestigung in Kraftfahrzeugkarosserien mit einer Blechmutter und einem Schraubenbolzen, der im Oberbegriff des Patentanspruchs erläuterten Art.

Aus der DE-A1-15 75 302 ist eine Blechmutter bekannt, die an ihrer Grundplatte eine dem das Gewinde aufweisenden Hülsenansatz vorgelagerte, trichterförmige Ausprägung aufweist und die in herkömmlicher Weise mit einem Schraubenbolzen, der eine Anspitzung aufweist, zusammenwirken kann.

Die bekannte Blechmutter weist jedoch den Nachteil auf, daß die Durchtrittsöffnung in ihrem Halteschenkel zu klein ist um die trichterförmige Ausprägung zum Ausrichten einer verdeckt angeordneten Blechmutter während der Montage zu benutzen.

Aus der DE-A1-15 54 648 ist eine spezielle Blechmutter für eine Griffbefestigung an Töpfen bekannt, bei der eine kegelartige Nase mit einem Langloch am Befestigungsteil derart zusammenwirkt, daß der Griff eng an den Topf angedrückt wird, wenn der Schraubenbolzen angezogen wird.

Die Aufgabe der Erfindung ist es, eine Bauteilbefestigung in Kraftfahrzeugkarosserien mit einer Blechmutter und einem Schraubenbolzen, der im Oberbegriff des Patentanspruchs erläuterten Art derart zu verbessern, daß die auf das Karosserieblech in einer verdeckten Anordnung aufgeklemmte Blechmutter beim Aufsetzen des Bauteiles mit angesetztem Schraubenbolzen sich in weiten Toleranzen nach den durch die Befestigungsbohrungen am Bauteil vorgegebene Lage ausrichten kann.

Gemäß der Erfindung wird diese Aufgabe gelöst, indem bei einer Bauteilbefestigung in Kraftfahrzeugkarosserien mit einer Blechmutter und einem Schraubenbolzen der im Oberbegriff des Patentanspruchs erläuterten Art die im Kennzeichenteil des Patentanspruches aufgezeigten Maßnahmen vorgesehen werden.

Dadurch, daß die Blechmutter in dem der trichterförmigen Ausprägung vorgelagerten Halteschenkel eine Durchtrittsöffnung von etwa der Größe des äußeren Durchmessers der trichterförmigen Ausprägung aufweist und die Blechmutter am Karosserieblech durch eine Halteöffnung und seitliche Sicken in einem Bereich begrenzt und leicht verlagerbar gehalten ist, der etwa der Differenz zwischen dem Innen- und Außendurchmesser der trichterförmigen Ausprägung entspricht, wird sichergestellt, daß z.B. bei einem am Karosserieblech zu befestigenden Scheibenwischermotor, dessen Wischerwelle durch eine vorbestimmte Durchtrittsöffnung zentriert wird und der an z.B. drei Befestigungsarmen Durchtrittsbohrungen für die Schraubenbolzen aufweist, die in die am Karosserieblech aufgesetzten Blechmuttern eingeführt werden sollen, sicher befestigt werden kann, obwohl die Lage der Durchtrittsöffnungen im Karosserieblech, die Lage der von Hand aufgesetzten Blechmuttern und die Lage der Durchtrittsbohrungen in den Befestigungsarmen ganz erhebliche Toleranzsummierungen aufweisen können.

Die Erfindung wird anhand eines in der Zeichnung gezeigten Ausführungsbeispieles näher erläutert. Es zeigt:
- Fig. 1: eine Draufsicht auf eine Blechmutter gemäß der Erfindung;
- Fig. 2: einen Schnitt entlang der Linie II-II in Fig. 1;
- Fig. 3: einen Schnitt durch die Bauteilbefestigung während der Montage und
- Fig. 4: eine Ansicht des Bereichs des Karosseriebleches in dem die Blechmutter gemäß der Erfindung angeordnet ist.

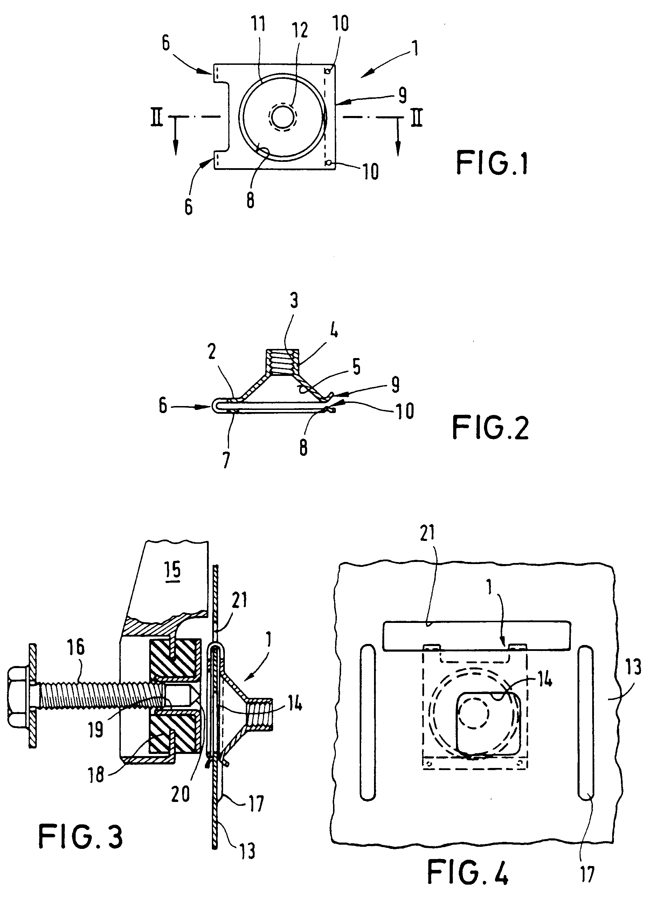

In den Figuren 1 und 2 ist eine Blechmutter 1 gemäß der Erfindung dargestellt.

Die Blechmutter 1 besteht im wesentlichen aus einer Grundplatte 2, an der ein das Gewinde 3 aufweisender Hülsenansatz 4 ausgeprägt ist. Dem Hülsenansatz 4 vorgelagert ist eine trichterförmige Ausprägung 5 angeordnet.

In einem Stück mit der Grundplatte 2 ist ein über zwei Bögen 6 um 180 Grad geklappter Halteschenkel 7 ausgebildet, der parallel zur Grundplatte 2 liegt und eine Durchtrittsöffnung 8 aufweist.

An der Grundplatte 2 ist eine das Aufsetzen der Blechmutter 1 erleichternde Abkantung 9 und am Halteschenkel sind zwei die Haftreibung herabsetzende Buckel 10 vorgesehen.

Gemäß der Erfindung ist die Durchtrittsöffnung 8 im Halteschenkel 7 zumindest so groß wie der Außendurchmesser 11 der trichterförmigen Ausprägung 5 an der Grundplatte 2. Der Innendurchmesser 12 der trichterförmigen Ausprägung geht praktisch in den Durchmesser des Gewindes 3 über.

In Fig. 3 ist die erfindungsgemäße Bauteilbefestigung während der Montage gezeigt. An einem Karosserieblech 13 sind benachbart einer Durchtrittsbohrung 14 für den das Bauteil 15 befestigenden Schraubenbolzen 16 eine Halteöffnung 21 und seitliche Sicken 17 eingeprägt, die ein übermäßiges Verlagern der Blechmutter 1 verhindern.

Am Bauteil 15 bzw. dessen Befestigungsarmen sind in einer Art Silent-Blöcke 18 Durchtrittsöffnungen 19 für den Schraubenbolzen 16 angeordnet. Der Schraubenbolzen 16 ist mit einer Anspitzung 20 versehen.

Betrachtet man nun die Fig. 3, so ist die Lage der Durchtrittsbohrungen 19 durch das Bauteil 15 bestimmt und der in diese Durchtrittsbohrungen eingesetzte Schraubenbolzen 16 trifft mit seiner Anspitzung 20 auf die trichterförmige Ausprägung 5 an der Grundplatte 2 der Blechmutter 1. Da die Blechmutter 1 am Karosserieblech 13 in einer Halteöffnung 21 eingesetzt leicht verschieblich gehalten ist, wird durch den Druck des Schraubwerkzeuges ein Verschieben der Blechmutter 1 bewirkt und der Schraubenbolzen 16 kann in das Gewinde 3 der Blechmutter 1 eingeschraubt werden. Die Breite der Halteöffnung 21 begrenzt die Bewegung der Blechmutter 1 nach oben und unten.

Seitliche Sicken 17 im Karosserieblech 13 sind in einem solchen Abstand angeordnet, daß die Blechmutter 1 nur so weit nach seitlich abweichen kann, daß ein durch die Durchtrittsöffnung 14 eindringender Schraubenbolzen 16 stets zuverlässig auf die trichterförmige Ausprägung 5 trifft.

Wie aus Fig. 4 ersichtlich ist, sind die Halteöffnung 21, die seitlichen Sicken 17 und die Durchtrittsöffnung 14 im Karosserieblech 13 so ausgelegt, daß sich die Blechmutter 1 nach dem Schraubenbolzen 16 im Karosserieblech 13 ausrichten kann.

## Patentansprüche

1. Bauteilbefestigung in Kraftfahrzeugkarosserien mit einer Blechmutter (1) und einem Schraubenbolzen (16), wobei die Blechmutter (1) in ihrer Grundplatte (2) eine dem das Gewinde (3) aufweisenden Hülsenansatz (4) vorgelagerte, trichterförmige Ausprägung (5) und einen der Grundplatte (2) vorgelagerten, eine Durchtrittsöffnung (8) aufweisenden Halteschenkel (7) aufweist und der Schraubenbolzen (16) mit einer Anspitzung (20) versehen ist,
**dadurch gekennzeichnet,** daß
- die Blechmutter (1) in dem der trichterförmigen Ausprägung (5) vorgelagerten Halteschenkel (7) eine Durchtrittsöffnung (8) von der Größe des Eintrittsdurchmessers (11) der trichterförmigen Ausprägung (5) aufweist und
- die Blechmutter (1) am Karosserieblech (13) durch eine Halteöffnung (21) und seitliche Sicken (17) in einem Bereich begrenzt und leicht verlagerbar gehalten ist, der der Differenz zwischen dem Eintritts- und Basisdurchmesser (11 und 12) der trichterförmigen Ausprägung (5) entspricht.

## Claims

1. Component fixing in motor vehicle bodies with a sheet metal nut (1) and a screw bolt (16), wherein the sheet metal nut (1) has, in its base plate (2), a funnel-shaped relief (5) preceding the tubular projection (4) comprising the thread (3) and a holding arm (7) preceding the base plate (2) and comprising a through-opening (8) and the screw bolt (16) is provided with a point (20), characterised in that
- the sheet metal nut (1) has, in the holding arm (7) preceding the funnel-shaped relief (5), a through-opening (8) of approximately the size of the inlet diameter (11) of the funnel-shaped relief (5) and
- the sheet metal nut (1) is held in a restricted and readily movable manner on the body sheet (13) by a holding opening (21) and lateral beads (17) in a region corresponding approximately to the difference between the inlet and base diameters (11 and 12) of the funnel-shaped relief (5).

## Revendications

1. Dispositif de fixation d'une pièce dans des carrosseries de véhicules à moteur, comportant un écrou de tôle (1) et un boulon fileté (16), sachant que l'écrou de tôle (1) présente dans sa plaque de base (2) un élargissement (5) en entonnoir placé à l'avant d'un prolongement en forme de douille (4) présentant le taraudage (3) et une branche de retenue (7) présentant un orifice de passage (8) et disposée à l'avant de la plaque de base (2), et sachant que le boulon fileté (16) est muni d'une pointe (20), caractérisé en ce que
- l'écrou de tôle (1) présente, dans la branche de retenue (7) placée à l'avant de l'élargissement (5) en entonnoir, un orifice de passage (8) de la taille du diamètre d'entrée (11) de l'élargissement (5) en entonnoir, et en ce que
- l'écrou de tôle (1) est cantonné dans une zone, qui correspond approximativement à la différence entre le diamètre d'entrée et le diamètre de base (11 et 12) de l'élargissement (5) en entonnoir, sur la tôle de carrosserie (13) par un orifice de retenue (21) et des moulures (17) latérales et y est maintenu de manière à pouvoir être légèrement déplacé.
